# EUROPÄISCHE PATENTANMELDUNG

(11) **EP 1 533 494 A2**
(43) Veröffentlichungstag der Anmeldung: **25.05.2005**
(21) Anmeldenummer: 04105697.9
(22) Anmeldetag: 11.11.2004
(51) Int. Cl.: F02B 75/02, F02B 63/00

(54) **Kraftfahrzeug mit Verbrennungsmotor und Hilfsaggregat**

(30) Priorität: 20.11.2003 DE 10354368
(71) Anmelder: Enginion AG, 13355 Berlin (DE)
(72) Erfinder: Wüsthoff, Detlef, 10585, Berlin (DE); Hoetger, Michael, 13503 Berlin (DE); Clemens, Herbert, 13505 Berlin (DE)
(74) Vertreter: Weisse, Renate Dr.

(57) **Zusammenfassung**

Ein Kraftfahrzeug mit einer Verbrennungskraftmaschine mit interner Verbrennung zum Antrieb des Kraftfahrzeugs, einem Hilfsaggregat, das einen externen Brenner und eine Expansionsmaschine umfasst, und einem Brennstofftank mit Brennstoff zur Energieversorgung des Brenners und der Verbrennungskraftmaschine, ist dadurch gekennzeichnet, dass ein Kalte-Flamme-Reaktor vorgesehen ist, dem Luft und Brennstoff aus dem Brennstofftank zur Vorbehandlung zumindest eines Teils des Brennstoff-Luftgemisches zu einem Kalte-Flamme-Produkt zuführbar ist.

## Beschreibung

### Technisches Gebiet

Die Erfindung betrifft ein Kraftfahrzeug mit
(a) einer Verbrennungskraftmaschine mit interner Verbrennung zum Antrieb des Kraftfahrzeugs,
(b) einem Hilfsaggregat, welches einen externen Brenner, und eine Expansionsmaschine umfasst
(c) einem Brennstofftank mit Brennstoff zur Energieversorgung des Brenners und der Verbrennungskraftmaschine.

Beispiele für eine Verbrennungskraftmaschine mit interner Verbrennung sind zum Beispiel ein Otto- oder Dieselmotor. Diese sind zu unterscheiden von Arbeitsmaschinen mit externer Verbrennung, wie zum Beispiel einer Dampfinaschine oder einem Stirling-Motor.

Bei einem Otto-Motor wird ein Brennstoff-Luft-Gemisch in die Brennkammer eines Zylinders eingeführt. Dort wird es komprimiert und mit Hilfe einer Zündkerze gezündet. Das Brennstoff-Luftgemisch verbrennt. Dabei erhöht sich der Druck und der Kolben wird nach unten bewegt. Durch diesen Prozess wird die Wärmeenergie des Verbrennungsprozesses in mechanische Arbeit umgewandelt. Ein Diesel-Motor arbeitet ebenfalls mit interner Verbrennung, benötigt jedoch keine Zündkerze zum Zünden des Brennstoff-Luftgemischs, sondern basiert auf einer Selbstzündung des in die hochverdichtete Luft eingespritzten Brennstoffes.

Der Zündprozess bei der internen Verbrennung erfolgt bei Ottomotoren zunächst an einem Punkt. Dort beginnt die Verbrennung an der Zündkerze. Dabei wird eine Flammenfront erzeugt, die sich dann im Brennraum ausbreitet. Als Klopfen wird eine ungewollte, lokale Selbstzündung bezeichnet. Das im Brennraum befindliche Brennstoff-Luftgemisch entzündet sich dabei punktuell an einer oder mehreren Stellen und erzeugt eine Druckwelle (Explosion), durch welche der Kolben geschädigt werden kann. Bei Motoren mit Selbstzündung (Dieselmotoren) beginnt die Verbrennung an unterschiedlichen Punkten im Brennraum. Auch hier bilden sich ungleichmäßige Flammenfronten aus.

Während der Ausbreitung der Flammenfront innerhalb des Brennraums entstehen hohe Temperatur und Druckgradienten. Diese führen zu einer hohen Schadstoffkonzentration im Abgas. An den von der Flammenfront noch nicht erreichten Stellen niedriger Temperatur entstehen Ruß, nicht vollständig verbrannte Kohlenwasserstoffe (HC) und Kohlenmonoxid (CO) aufgrund von unvollständiger Verbrennung. An besonders heißen Stellen werden unerwünschte Stickoxide (NOₓ) erzeugt. Zur Verringerung des Rußanteils der Schadstoffemissionen müssen aufwendige Rußfilter eingesetzt werden. Es ist wünschenswert, die Schadstoffemissionen zu verringern.

Ein Dampfkreislauf umfasst einen externen Brenner, eine Dampferzeuger und eine Expansionsmaschine. Ein Arbeitsmedium wird in dem Dampferzeuger eines solchen Dampfkreislaufs zunächst von den Heißgasen des Brenners verdampft. Das unter hohem Druck stehende, heiße, verdampfte Arbeitsmedium wird in der Expansionsmaschine unter Arbeitsleistung expandiert. Die Expansionsmaschine ist zum Beispiel ein Hub- oder eine Rotationskolbenmaschine. Auch hier entstehen Abgase, welche durch die kontinuierliche Verbrennung mit sehr geringen Schadstoffemissionen verbunden sind.

### Stand der Technik

Die Verwendung eines zusätzlichen Hilfsaggregats zur Erzeugung von Wärme und Strom oder auch als zusätzlicher Antrieb sind allgemein bekannt. Insbesondere bei größeren Kraftfahrzeugen ist es möglich, dass mehr Strom benötigt wird, als die herkömmliche, an den Antriebsmotor angekoppelte Lichtmaschine liefern kann. Auch ist es - zum Beispiel bei Lastkraftfahrzeugen - wünschenswert, ein Hilfsaggregat zur Verfügung zu haben, das ohne Betrieb des Antriebsmotors Wärme und Strom liefern kann.

Es ist bekannt, die Abgase des Antriebsmotors zur Erzeugung des Dampfes des Dampfkreisprozesses im Hilfsaggregat zu verwenden. Hierbei ist jedoch wiederum der Antriebsmotor zu betätigen, was nicht immer erwünscht ist.

Es ist weiterhin bekannt, die Abgasemissionen zu verringern, indem der Dampfkreisprozess mit einem schadstoffarmen Brenner ausgestattet wird. Ein solcher Brenner ist zum Beispiel ein Porenbrenner, wie er in der DE 102 28 411 beschrieben ist, oder ein schadstoffarmer Oberflächenstrahlungsbrenner.

Es ist aus der DE 100 48 511 weiterhin bekannt, die Emissionen des Verbrennungsmotors zu senken, indem dessen Abgase in einem weiteren Verbrennungsvorgang außerhalb des Motors nachverbrannt werden.

Aus der nicht vorveröffentlichten DE 102 40 234.5 ist eine Verbrennungskraftmaschine mit interner Verbrennung bekannt, der ein Brennstoff-Luft-Gemisch zuführbar ist. Eine solche Verbrennungskraftmaschine wird auch als "HCCI" (Homogeneous Charge Compression Ignition) bezeichnet. Bei HCCI-Anordnungen wird allgemein eine Mischung aus Luft, Brennstoff und rezirkulierten Abgasen verdichtet bis Selbstzündung eintritt. Bei geeigneter Zusammensetzung des Brennstoff-Luft-Gemisches wird die Schadstoffemission verringert. Die beschriebene HCCI-Anordnung arbeitet mit einem Brennstoff-Luftgemisch, welches in einem sogenannten "Kalte-Flamme-Reaktor" vorbehandelt wird. Dadurch wird der durch niedrige Emissionen gekennzeichnete Lastbereich der Verbrennungskraftmaschine vergrößert.

Ein Kalte-Flamme-Reaktor und der unter dem Begriff "Kalte Flamme" verstandene Prozess ist in der WO 00/06948 ausführlich beschrieben. Insbesondere wird unter einem Kalte-Flamme-Reaktor ein Reaktor verstanden, der es ermöglicht, den Brennstoff bei einem Druck p ≥ 1 bar mit mindestens einem auf 520 K bis 880 K aufgeheizten oder bei niedrigerem Druck mit einer Absenkung des Temperaturbereichs vorgewärmten Oxidator und einem molaren C/O-Verhältnis zwischen 1:0,14 bis 1:25 in einem Reaktionsraum so in Kontakt gebracht wird, dass exotherme Vorreaktionen in Form einer kalten Flamme initiiert werden, die auch bei homogener Mischung von Brennstoff und Oxidator nur einen Teilumsatz des Brennstoffs und des Oxidators bewirken. Weiterhin ermöglicht der Reaktor, dass durch Einstellen einer technisch relevanten Verweilzeit tᵥ des so hergestellten Gemischs in den Reaktionsraum, von tᵥ>25 ms bei p≤1 bar und Verweilzeiten, die bei Erhöhung des Druckes unter sonst gleichen Bedingungen kleiner werden, und einer begrenzten Wärmeabfuhr aus der Reaktionszone über einen Inertgasstrom mit einem Verhältnis des Wärmekapazitätsstroms des Oxidators zum Produkt aus Brennstoffmassenstrom M_{b} und Heizwert Hᵤ, das im adiabaten Reaktionsraum ist, und/oder über die Reaktorwand mit einer Wärmestromdichte von < 85 kW/m² eine kinetische Reaktionshemmung der Weiterreaktion des bei der kalten Flamme entstandenen, oxidierbaren Gemisches eintritt, wodurch eine Selbstzündung desselben insbesondere für eine voraussagbare Zeit verhindert wird.

Es handelt sich also um ein z. B. in einem unterstöchiometrischen Verbrennungsprozess ohne Selbstzündung erzeugtes Produkt. In dem Vorbehandlungsprozess heizt sich das Kalte-Flamme-Produkt auf und erlangt einen sehr hohen Grad an Homogenität. Die Verbrennung in einem Brennraum erfolgt mit verringerter Schadstoffemission.

### Offenbarung der Erfindung

Es ist Aufgabe der Erfmdung, ein Kraftfahrzeug mit einer Verbrennungskraftmaschine zum Antrieb und mit eine Wärmekraftmaschine zum Betrieb eines Hilfsaggregats zu schaffen, das geringere Ruß- und Schadstoffemissionen aufweist.

Erfindungsgemäß wird die Aufgabe dadurch gelöst, dass ein Kalte-Flamme-Reaktor vorgesehen ist, dem Luft und Brennstoff aus dem Brennstofftank zur Vorbehandlung zumindest eines Teils des Brennstoff-Luftgemisches zu einem Kalte-Flamme-Produkt zuführbar ist. Es hat sich überraschender Weise herausgestellt, dass die Zugabe von Kalte-Flamme-Produkt zu einem Verbrennungsprozess, bei welchem Brennstoff mit Luft verbrannt wird, die Schadstoffemission verringert. Dies betrifft insbesondere die Emissionen von Ruß, unverbrannten Kohlenwasserstoffen (UHC), Kohlenmonoxid (CO) und Stickoxiden (NOₓ). Dabei reicht bereits ein kleiner Anteil an Kalte-Flamme Produkt aus um eine signifikante Verringerung der Schadstoffe zu erreichen.

Der Kalte-Flamme-Reaktor ist besonders vorteilhaft, wenn der Verbrennungskraftmaschine sowohl direkt Brennstoff aus dem Brennstofftank, als auch Kalte-Flamme-Produkt zuführbar ist und dem Brenner des Hilfsaggregats ausschließlich Kalte-Flamme-Produkt als Brennstoff zuführbar ist. Die Schadstoff-Reduzierung wird dann sowohl bei der Verbrennungskraftmaschine mit interner Verbrennung, als auch beim Hilfsaggregat erreicht.

In einer alternativen Ausgestaltung der Erfindung wird der Verbrennungskraftmaschine ausschließlich direkt Brennstoff aus dem Brennstofftank und dem Brenner des Hilfsaggregats ausschließlich Kalte-Flamme-Produkt als Brennstoff zuführt. Bei dieser Ausgestaltung wird besonders die Schadstoffemission des Hilfsaggregats verringert, was beim Standbetrieb vorteilhaft ist. Diese Ausgestaltung eignet sich vor allem bei der Nachrüstung oder Weiterentwicklung von bestehenden Antrieben. Der bereits existierende Antriebsmotor braucht nicht verändert werden. Nur das zusätzliche Hilfsaggregat wird mit einem vorbehandelten Brennstoffgemisch betrieben.

In einer weiteren Alternative der Erfindung ist der Verbrennungskraftmaschine und dem Brenner des Hilfsaggregats ausschließlich Kalte-Flamme-Produkt zuführbar. Dann arbeitet die Verbrennungskraftmaschine und der Brenner des Hilfsaggregats ausschließlich mit Kalte-Flamme-Produkt. Dabei wird die Verbrennungskraftmaschine entsprechend den Anforderungen an das neue Brennstoff-Gemisch angepasst.

In einer besonders bevorzugten Ausgestaltung der Erfindung werden dem Brenner des Hilfsaggregats zumindest Teile des Abgases aus der Verbrennungskraftmaschine zugeführt. Das Abgas wird bei dieser Anordnung in dem besonders schadstoffarmen Brenner des Hilfsaggregats nachverbrannt. Damit das Abgas im schadstoffarmen Brenner brennbar ist, wird es mit Kalte-Flamme-Produkt in einem geeigneten Verhältnis vermischt. Dies geschieht unter Berücksichtigung der geforderten Brennerleistung. Damit werden die Schadstoffemissionen weiter reduziert. Unverbrannte Kohlenwasserstoffe und Ruß dienen als weitere Energielieferanten. Im Gegensatz zu den Anordnungen ohne Brenner, bei denen die Wärmeeinkopplung in die Wärmekraftmaschine des Hilfsaggregats ausschließlich durch das Abgas erzeugt wird, kann das Hilfsaggregat auch im Stand, also ohne den Antriebsmotor betrieben werden.

In einer besonders bevorzugten Ausgestaltung der Erfindung ist der Brenner des Hilfsaggregats als Porenbrenner oder Oberflächenstrahlungsbrenner ausgebildet. Solche Brenner sind besonders schadstoffarm und können je nach Ausgestaltung an eine Vielzahl von unterschiedlichen, gasförmigen Brennstoffen angepasst werden. Durch die Verwendung eines Kalte-Flamme-Reaktors können auch unterschiedliche, flüssige Brennstoffe verwendet werden.

Zur weiteren Reduktion von Schadstoffen kann ein Katalysator zur Behandlung der Abgase des Verbrennungsmotors oder auch des Hilfsaggregats vorgesehen sein. Dies ist besonders dann sinnvoll, wenn nicht der gesamte Abgasstrom der Verbrennungskraftmaschine durch den Brenner des Hilfsaggregats geleitet werden kann. Ein Katalysator für die Abgase des Brenners ist jedoch bei einem schadstoffarmen Brenner im allgemeinen nicht erforderlich.

In einer weiteren Ausgestaltung der Erfindung ist dem Verbrennungsmotor zusätzlich zu dem Kalte-Flamme-Produkt ein nicht-vorbehandeltes Brennstoff-Luftgemisch zuführbar. Ein solcher Motor im teilweisen HCCI-Modus ist ohnehin schadstoffarm. Durch die Zugabe von Kalte-Flamme-Produkt ist jedoch der Lastbereich erweiterbar. Da der Kalte-Flamme-Reaktor ohnehin für das Hilfsaggregat verwendet werden kann, bietet sich hier eine gute Möglichkeit, den Lastbereich des HCCI-Motors ohne weitere Komponenten zu erweitern. Hierzu können Mittel zum Umschalten des Betriebsmodus des Verbrennungsmotors vorgesehen sein, durch welche dem Verbrennungsmotor entweder Kalte-Flamme-Produkt oder ein nicht-vorbehandeltes Brennstoff-Luftgemisch zuführbar ist.

Der Anteil des Kalte-Flamme-Produkts kann weniger als 30 % des gesamten dem Verbrennungsmotor zugeführten Brennstoffs sein. Dadurch wird bereits eine signifikante Reduktion des Schadstoffausstoßes erreicht und der Kalte-Flamme-Reaktor kann klein gehalten werden.

Die Erfindung ist besonders vorteilhaft, der Verbrennungsmotor ein Dieselmotor ist und der Anteil des Kalte-Flamme-Produkts weniger als 5% des gesamten dem Dieselmotor zugeführten Brennstoffs ist.

Ausgestaltungen der Erfindung sind Gegenstand der Unteransprüche. Ausführungsbeispiele sind nachstehend unter Bezugnahme auf die beigefügten Zeichnungen näher erläutert.

### Kurze Beschreibung der Zeichnungen

- Fig.1: ist eine schematische Darstellung einer Anordnung mit einem Verbrennungsmotor, dem sowohl Brennstoff als auch Kalte-Flamme-Produkt zugeführt wird und einem Hilfsaggregat, dem nur Kalte-Flamme-Produkt zugeführt wird.
- Fig.2: ist eine schematische Darstellung einer Anordnung mit einem Dieselmotor, dessen Abgas zusammen mit Kalte-Flamme-Produkt in dem Brenner eines Hilfsaggregats nachverbrannt wird.
- Fig.3: ist eine schematische Darstellung der Anordnung aus Fig.1, wobei das Abgas des Verbrennungsmotors zusammen mit Kalte-Flamme-Produkt in dem Brenner eines Hilfsaggregats nachverbrannt wird.
- Fig.4: ist eine schematische Darstellung einer Anordnung mit einem Verbrennungsmotor und einem Hilfsaggregat, denen ausschließlich Kalte-Flamme-Produkt zugeführt wird.
- Fig.5: ist eine schematische Darstellung der Anordnung aus Fig.4, wobei das Abgas des Verbrennungsmotor zusammen mit Kalte-Flamme-Produkt in dem Brenner eines Hilfsaggregats nachverbrannt wird.

### Beschreibung der Ausführungsbeispiele

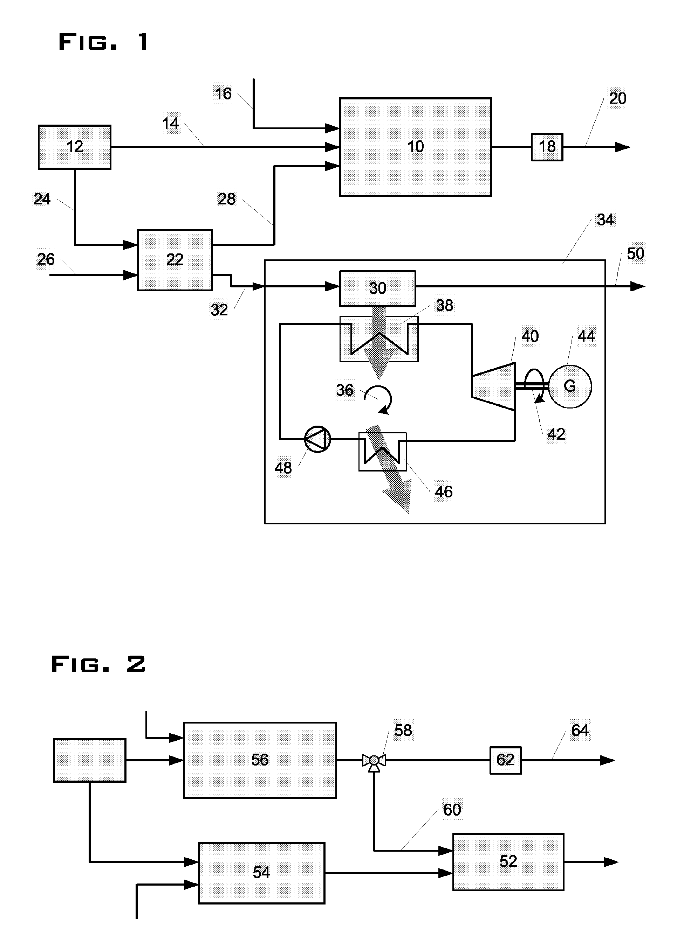

In Fig. 1 ist mit 10 ein Antriebsmotor bezeichnet. Der Brennstoff für den Antriebsmotor befindet sich in einem Tank 12. Der Antriebsmotor 10 ist eine Verbrennungskraftmaschine, die nach dem bereits oben beschriebenen HCCI-Prinzip arbeitet. Die Verbrennungskraftmaschine umfasst einen Zylinder mit einem Brennraum, dem auf bekannte Weise ein Brennstoff-Luft-Gemisch zugeführt wird. Dies wird durch Pfeile 14 und 16 dargestellt. Das Brennstoff-Luft-Gemisch wird verdichtet, bis es sich entzündet. Dabei wird eine besonders homogene Reaktion erreicht. Bei dieser Betriebsweise der Verbrennungskraftmaschine wird ein vergleichsweise schadstoffarmes Abgas erzeugt. Das Abgas wird in einem Katalysator 18 weiter von Schadstoffen befreit, bevor es an die Umgebung abgegeben wird. Dies ist durch einen Pfeil 20 dargestellt.

Neben dem Brennstoff-Luft-Gemisch wird der Verbrennungskraftmaschine Kalte-Flamme-Produkt zugeführt. Hierfür ist ein Kalte-Flamme-Reaktor 22 vorgesehen. Der Kalte-Flamme-Reaktor arbeitet auf die in der WO 00/06948 ausführlich beschriebenen Weise und wird daher hier nicht weiter erläutert. Der flüssige Brennstoff aus dem Tank 12 wird dem Reaktor 22 zugeführt und dient als Basis für das Kalte-Flamme-Produkt. Dies ist durch einen Pfeil 24 dargestellt. Weiterhin wird dem Reaktor 22 Luft zugeführt. Dies ist durch einen Pfeil 26 dargestellt. Das in einer unterstöchiometrischen Reaktion vorbehandelte Kalte-Flamme-Produkt wird dem Brennstoff-Luftgemisch der Verbrennungskraftmaschine zugefügt. Dies ist durch einen Pfeil 28 dargestellt. Durch die Zugabe von Kalte-Flamme-Produkt wird die Schadstoffemission des Antriebsmotors verringert.

Weiterhin wird das Kalte-Flamme-Produkt einem Porenbrenner 30 zugeführt. Dies ist durch einen Pfeil 32 dargestellt. Der Porenbrenner 30 ist Teil eines allgemein mit 34 bezeichneten Hilfsaggregats. Mit dem Hilfsaggregat 34 wird Strom für das Bordnetz des Kraftfahrzeugs erzeugt. Je nach Ausgestaltung des Kraftfahrzeugs kann neben Strom auch Wärme oder sonstige mechanische Arbeit zur Verfügung gestellt werden. Das Hilfsaggregat 34 umfasst einen Clausius-Rankine-Dampfkreisprozess 36.

In dem Dampfkreisprozess 36 wird ein Arbeitsmittel, zum Beispiel Wasser in einem Wärmeübertrager 38 verdampft. Hierfür wird der Wärmeübertrager mit dem in dem Porenbrenner 30 erzeugten Heißgas beaufschlagt. Das durch den Wärmeübertrager gepumpte, verdampfte Arbeitsmittel steht dann unter hohem Druck. In einem Expander 40, zum Beispiel einem Axialkolbenexpander wird das Arbeitsmittel entspannt. Dabei wird Arbeit an einer Welle 42 verrichtet. Die Welle 42 treibt einen Generator 44 an. Mit dem Generator wird Strom erzeugt, der in das (nicht dargestellte) Bordnetz des Kraftfahrzeug eingespeist wird.

Das entspannte Arbeitsmittel wird in einem Kondensator 46 kondensiert. Die dabei freiwerdende Wärme kann bei Bedarf ebenfalls im Kraftfahrzeug genutzt werden. Das kondensierte Arbeitsmittel steht dann wieder zur Verfügung und wird mit einer Pumpe 48 zum Wärmeübertrager 38 gepumpt.

Der in diesem Ausführungsbeispiel verwendete Porenbrenner ist in der DE 43 22 109 A1 (Durst) beschrieben. Der Porenbrenner umfasst ein Gehäuse, welches mit porösem Material gefüllt ist. Das poröse Material ist auf zwei oder drei Zonen verteilt, in denen jeweils eine unterschiedliche Porosität vorliegt. Das poröse Material besteht aus hitzebeständigem Schaumkunststoff, Keramik, Metall oder einer Metalllegierung. Der Einfluss der unterschiedlichen Materialporositäten auf das Verbrennungsverhalten wird durch die Péclet-Zahl wiedergegeben. Diese Zahl gibt das Verhältnis von Wärmestrom infolge Transport zu Wärmestrom infolge Leitung an. Die Porosität der beschriebenen Anordnung ist so ausgelegt, dass in der einlassseitigen Zone eine Peclet-Zahl im Bereich von 40 und in der auslassseitigen Zone eine Péclet-Zahl im Bereich von 90 vorliegt. Im feinporigen einlassseitigen Bereich kann sich keine Flamme ausbilden. An der gut defmierten Grenzfläche zwischen den beiden Zonen stabilisiert sich dann die Verbrennungsregion.

Der Brenner arbeitet im laufenden Betrieb bei niedrigen, gleichförmigen Verbrennungstemperaturen und ist daher extrem schadstoffarm und für eine Vielzahl verschiedener Brennstoffe gut geeignet. Weiterhin hat der Brenner eine hohe Wärmekapazität und lässt hohe Verbrennungsgeschwindigkeiten zu, die zu einer hohen Effizienz führen.

Das extrem schadstoffarme Abgas des Porenbrenners verlässt das Hilfsaggregat 34 (Equal Zero Emission Engine) in die Umgebung. Dies ist durch einen Pfeil 50 dargestellt. Durch die Kombination des schadstoffarmen Antriebsmotors und das ebenfalls sehr schadstoffarme Hilfsaggregat hat das Kraftfahrzeug insgesamt in dieser Ausgestaltung einen sehr geringen Schadstoffausstoß.

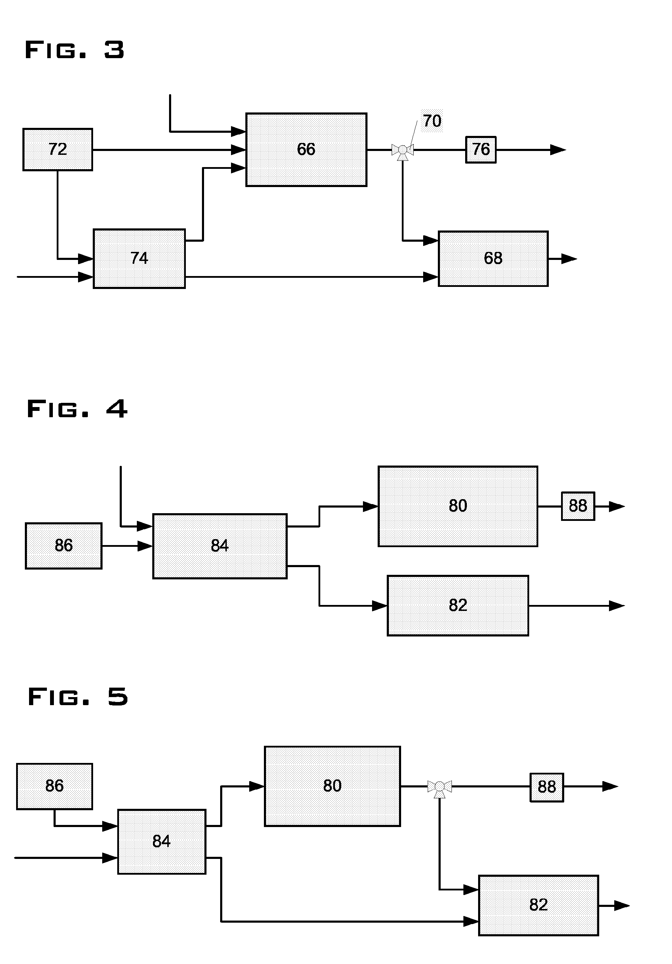

In Fig.2 ist ein weiteres Ausführungsbeispiel dargestellt. Analog zu dem Ausführungsbeispiel aus Fig.1 ist hier ein Hilfsaggregat 52 vorgesehen. Das Hilfsaggregat 52 ist genauso ausgebildet wie das Hilfsaggregat 34 in Fig. 1, so dass es nicht weiter beschrieben werden muss. Das Hilfsaggregat 52 wird, wie bei Fig. 1 beschrieben, mit Kalte-Flamme-Produkt aus einem Kalte-Flamme-Reaktor 54 betrieben.

Als Antriebsmotor 56 dient in diesem Ausführungsbeispiel ein herkömmlicher Dieselmotor. Dieser hat eine vergleichsweise hohe Schadstoffemission. Zur Reduzierung der Schadstoffe im Abgas wird das Abgas zumindest teilweise dem Porenbrenner des Hilfsaggregats 52 zugeführt. Dies ist durch einen Pfeil 60 dargestellt. Hierfür ist ein Regelventil 58 vorgesehen. In dem Porenbrenner werden die Abgase nachverbrannt, so dass dadurch die Schadstoffemissionen verringert werden. Zusätzlich liefert die Nachverbrennung der unverbrannten Kohlenwasserstoffe und von Ruß weitere Energie. Abgas, das nicht dem Brenner des Hilfsaggregats 52 zugeführt wird, wird über einen Katalysator 62 an die Umgebung abgegeben. Dies ist durch einen Pfeil 64 dargestellt.

In Fig.3 ist ein Ausführungsbeispiel analog zu dem Ausführungsbeispiel in Fig.1 dargestellt. Bei diesem Ausführungsbeispiel, wird das bereits schadstoffarme Abgas des Antriebsmotors 66 dem Porenbrenner des Hilfsaggregats 68 zugeführt. Hierfür ist ein Regelventil 70 vorgesehen. Wie bei Fig. 1 wird dem Motor 66 neben Brennstoff aus dem Tank 72 auch Kalte-Flamme-Produkt aus dem Kalte-Flamme-Reaktor 74 zugeführt. Der Porenbrenner arbeitet nur mit Kalte-Flamme-Produkt. Nicht nachverbranntes Abgas wird durch einen Katalysator 76 an die Umgebung abgegeben.

In Fig. 4 ist ein Ausführungsbeispiel dargestellt, bei dem sowohl der Verbrennungsmotor 80, als auch das Hilfsaggregat 82 ausschließlich mit Kalte-Flamme-Produkt betrieben werden. Der Brennstoff wird also komplett aus dem Tank 86 direkt zum Kalte-Flamme-Reaktor geleitet. Von dort aus steht es für den Antriebsmotor, zum Beispiel einen HCCI-Motor, und dem Antriebsaggregat zur Verfügung. Wie bei den oben beschriebenen Beispielen kann das Abgas über einen Katalysator 88 an die Umgebung abgegeben werden. Dabei kann das Abgas auch wieder teilweise im Brenner des Hilfsaggregats 82 nachverbrannt werden. Diese Variante ist in Fig. 5 ebenfalls schematisch dargestellt.

Die oben aufgeführten Ausführungsbeispiele zeigen, dass eine Vielzahl von verschiedenen Antriebsmotoren denkbar sind. Ebenso ist statt eines Clausius-Rankine-Kreisprozesses auch jeder andere Dampfkreisprozess oder Stirlingprozess möglich, der mit einem schadstoffarmen Brenner arbeitet. Die Ausführungsbeispiele sollen die Erfindung daher nur erläutern, den Schutzumfang der Ansprüche jedoch nicht beschränken.

## Patentansprüche

1. Kraftfahrzeug mit
(a) einer Verbrennungskraftmaschine mit interner Verbrennung zum Antrieb des Kraftfahrzeugs,
(b) einem Hilfsaggregat, das einen externen Brenner und eine Expansionsmaschine umfasst, und
(c) einem Brennstofftank mit Brennstoff zur Energieversorgung des Brenners und der Verbrennungskraftmaschine,
**dadurch gekennzeichnet, dass**
(d) ein Kalte-Flamme-Reaktor vorgesehen ist, dem Luft und Brennstoff aus dem Brennstofftank zur Vorbehandlung zumindest eines Teils des Brennstoff-Luftgemisches zu einem Kalte-Flamme-Produkt zuführbar ist.

2. Anordnung nach Anspruch 1, **dadurch gekennzeichnet, dass** der Verbrennungskraftmaschine sowohl direkt Brennstoff aus dem Brennstofftank, als auch Kalte-Flamme-Produkt zuführbar ist und dem Brenner des Hilfsaggregats ausschließlich Kalte-Flamme-Produkt als Brennstoff zuführbar ist.

3. Kraftfahrzeug nach Anspruch 1, **dadurch gekennzeichnet, dass** der Verbrennungskraftmaschine ausschließlich direkt Brennstoff aus dem Brennstofftank und dem Brenner des Hilfsaggregats ausschließlich Kalte-Flamme-Produkt als Brennstoff zuführbar ist.

4. Kraftfahrzeug nach Anspruch 1, **dadurch gekennzeichnet, dass** der Verbrennungskraftmaschine und dem Brenner des Hilfsaggregats ausschließlich Kalte-Flamme-Produkt zuführbar ist.

5. Kraftfahrzeug nach einem der vorgehenden Ansprüche, **dadurch gekennzeichnet, dass** dem Brenner des Hilfsaggregats zumindest Teile des Abgases aus der Verbrennungskraftmaschine statt Luft zuführbar sind.

6. Kraftfahrzeug nach einem der vorgehenden Ansprüche, **dadurch gekennzeichnet, dass** ein Katalysator zur Behandlung der Abgase des Verbrennungsmotors und/oder des Hilfsaggregats vorgesehen ist.

7. Kraftfahrzeug nach einem der vorgehenden Ansprüche, **dadurch gekennzeichnet, dass** dem Verbrennungsmotor zusätzlich zu dem Kalte-Flamme-Produkt ein Brennstoff-Luftgemisch zuführbar ist.

8. Kraftfahrzeug nach Anspruch 7, **dadurch gekennzeichnet, dass** Mittel zum Umschalten des Betriebsmodus des Verbrennungsmotors vorgesehen sind, durch welche dem Verbrennungsmotor entweder Kalte-Flamme-Produkt oder ein nicht-vorbehandeltes Brennstoff-Luftgemisch zuführbar ist.

9. Kraftfahrzeug nach einem der vorgehenden Ansprüche, **dadurch gekennzeichnet, dass** der Verbrennungsmotor ein Dieselmotor ist.

10. Kraftfahrzeug nach einem der vorgehenden Ansprüche, **dadurch gekennzeichnet, dass** der Brenner des Hilfsaggregats als Porenbrenner oder Oberflächenstrahlungsbrenner ausgebildet ist.

11. Kraftfahrzeug nach einem der Ansprüche 2 oder 4, **dadurch gekennzeichnet, dass** der Anteil des Kalte-Flamme-Produkts weniger als 30 % des gesamten dem Verbrennungsmotor zugeführten Brennstoffs ist.

12. Kraftfahrzeug nach einem der vorgehenden Ansprüche, **dadurch gekennzeichnet, dass** der Verbrennungsmotor ein Dieselmotor ist und der Anteil des Kalte-Flamme-Produkts weniger als 5% des gesamten dem Dieselmotor zugeführten Brennstoffs ist.

13. Kraftfahrzeug nach einem der vorgehenden Ansprüche, **dadurch gekennzeichnet, dass** der Hilfsaggregat einen Dampfkreisprozess umfasst.

14. Kraftfahrzeug nach Anspruch 13, **gekennzeichnet durch** Mittel zur Beaufschlagung des Dampferzeugers im Dampfkreisprozess des Hilfsaggregats mit dem in der Verbrennungskraftmaschine erzeugten Abgas zusätzlich zum Brenner zur Erzeugung von Dampf.

15. Kraftfahrzeug nach einem der vorgehenden Ansprüche, **dadurch gekennzeichnet, dass** der Hilfsaggregat einen Stirling-Motor umfasst.
